# EUROPEAN PATENT SPECIFICATION

(11) **EP 4 263 111 B1**
(45) Date of publication and mention of the grant of the patent: **26.03.2025**
(21) Application number: 20829029.6
(22) Date of filing: 21.12.2020
(51) Int. Cl.: B23K 26/03, B23K 26/06, B23K 26/067, B23K 26/362

(54) **LASER ENGRAVING DEVICE FOR MULTIPLE LASER BEAMS USING A DATA LINK FOR ADJUSTING THE FOCUSING POSITION**
LASERGRAVIERVORRICHTUNG FÜR MEHRERE LASERSTRAHLEN MIT EINER DATENVERBINDUNG ZUR EINSTELLUNG DER FOKUSLAGE
DISPOSITIF DE GRAVURE AU LASER POUR DE MULTIPLES FAISCEAUX LASER FAISANT APPEL À UNE LIAISON DE DONNÉES POUR AJUSTER LA POSITION DE FOCALISATION

(43) Date of publication of application: 25.10.2023
(73) Proprietor: ECOLE POLYTECHNIQUE FEDERALE DE LAUSANNE (EPFL), 1015 Lausanne (CH)
(72) Inventor: BURNIER, Luc, 74520 Savigny (FR); SCHUELER, Andreas, 1018 Lausanne (CH)
(74) Representative: Vesterinen, Jussi Tapio
(86) International application number: PCT/IB2020/062269
(87) International publication number: WO 2022/136905

(56) References cited:
- US-A1- 2006 196 858
- US-A1- 2019 101 443
- US-A1- 2020 209 523

## Description

### TECHNICAL FIELD

The present invention relates to a laser engraving device for multiple laser beams for processing a target surface, and to a method of engraving a target surface by using a laser engraving device, see claims 1 and 15. The target surface may be for instance a non-patterned coating of a glazing unit installed on a train or in a building. By engraving the non-patterned coating by using the proposed device, a patterned coating can be obtained which would improve the penetration of electromagnetic waves through the coating in the radio frequency spectrum used for wireless communications.

### BACKGROUND OF THE INVENTION

In order to reduce energy consumption of for example trains and buildings, energy saving windows with better thermal properties are increasingly used. These energy saving windows are typically composed of two or more windowpanes. The thickness of the glass panes is selected to satisfy mechanical requirements of the glazing unit given by regulations. The gap between the glass panes suppresses acoustic noise, and it also improves thermal insulation. Energy saving windows typically comprise one or more coated glass panes. This coating has a low thermal emissivity and therefore reduces the heat transfer by radiation. It can also be a sun protection coating, reducing the transmission in the near infrared region. It is generally made of one to three layers of silver (Ag) along with some dielectric layers (zinc oxide (ZnO), silicon nitride (Si3N4), titanium dioxide (TiO2), etc.). Most trains and many modern buildings have a metallic structure, which when combined with the coating having one or more metallic layers on the windows, results in strong microwave attenuation inside the structure due to a Faraday cage effect. Electromagnetic (EM) waves used for telecommunications are thus strongly attenuated. This is problematic, as nowadays, wireless communications are increasingly used.

Solutions exist to perform a laser treatment on the electrically conductive coating to convert the coating to a frequency-selective surface (FSS). The FSS is a thin and repetitive surface designed to reflect, transmit or absorb electromagnetic fields. The FSS is able to make the coating, and thus the glazing unit substantially transparent to EM waves used in wireless telecommunications. The achieved effect is not limited to any specific frequency band, and the FSS makes it possible to achieve low attenuation for a large band of frequencies including the frequencies used in current wireless communication systems, such as global system for mobile communications (GSM), long-term evolution(LTE), multiple-input and multiple-output (MIMO), and future ones. However, the problem with the currently known laser treatment solutions is that they can only be applied at the production site, and the treatment can only be applied to a flat non-assembled glazing unit. This means that already installed energy saving glazing units, need to be replaced to benefit from the currently existing laser treatment solutions. This is a major limitation of the existing solutions.

It is also known to install repeaters in trains or buildings with poor indoor signal coverage. Repeaters consist of an antenna placed outside and another one placed inside, which is connected to an amplifier to increase the signal inside the train or building. This solution is technology-dependent, and a repeater works for a defined range of frequencies only. Since telecommunication standards evolve quickly, repeaters have to be often renewed (i.e., typically between 5 and 8 years). Furthermore, the repeater-based systems use a chipset and active components, which are prone to frequent failures. Moreover, repeaters have a high energy consumption. This reduces the energy savings achieved by modern windows.

Currently there is no reliable and well-functioning solution available to treat conductive coatings of glazing units that have been already installed in order to reduce their attenuation for EM waves used in telecommunications, and which would optionally improve their performance in terms of MIMO efficiency. More broadly, a reliable and well-functioning solution is needed to engrave or mark surfaces by using laser beam technology.

US2019101443A1 (describing the preamble of claims 1 and 15) discloses a laser processing apparatus that includes a branching unit configured to branch a laser beam to a first optical path and a second optical path, a condenser configured to condense the branched laser beams on a processing face of a workpiece, an output power measuring unit configured to measure the output power of the laser beam emitted from a laser beam generation unit and having passed through the condenser, and a blocking member positioning mechanism disposed between the condenser and the output power measuring unit and capable of positioning a blocking member between a first laser beam blocking position at which the blocking member blocks only the laser beam of the first optical path from between the branched laser beams and a retracted position at which the blocking member blocks none of the laser beams.

US2006196858A1 relates to a method and an apparatus for laser marking indicia in the volume of gemstones such as diamonds, the indicia being made up of a plurality of microscopic dot-shaped marks whose build-up can be initiated by exposing naturally-occurring internal defects or impurities in the volume of a gemstone to a tightly focused train of laser pulses. Authentication data is encoded in the gemstone from the relative spatial arrangement of the dot-shaped marks that form the indicium.

US2020209523A1 discloses a laser processing apparatus that includes a laser light output section, a laser light scanning section, a distance measurement light emitting section which emits distance measurement light, a pair of light receiving elements which receives the distance measurement light emitted from the distance measurement light emitting section and reflected by the workpiece.

### SUMMARY OF THE INVENTION

It is an object of the present invention to overcome at least some of the problems identified above related to engraving surfaces. More specifically, one of the aims of the present invention is to provide a device that can be used to engrave an electrically conductive coating to generate a patterned or structured coating. Compared with non-patterned coatings, the patterned coating would reduce the attenuation for EM waves used in telecommunications, and it would have an improved performance.

According to a first aspect of the invention, there is provided a laser engraving device as recited in claim 1.

The invention allows laser processing of any surface having any shape. For instance, the device may be used to process an assembled glazing unit, which may have any number of windowpanes, and this with a high focus positioning accuracy. This is not achievable with currently known existing laser engraving systems using a mechanical, capacitive, inductive or optical distance sensor. In the present invention, fast tracking of the target surface is achieved using an optical sensor, which has a response time of 0.002 ms or even less, and a high-speed focusing element, such as a tunable lens. The device may be placed on a motion system, which would allow a high displacement speed (e.g. up to 10 m/s) of the device. It is to be noted that the speed of a standard engraving system using imaging and detection technology is often limited by the response time, which is typically between 20 ms and 100 ms.

Furthermore, as the proposed device comprises a focusing element, there is no need to move the entire device to follow the target surface, which would usually induce a speed limitation due to a mechanical moving part. Moreover, the proposed device has the advantage that the desired pattern can be generated rapidly thanks to the possibility of simultaneously using a plurality of engraving beams to engrave the target surface. More specifically, the use of multiple beams reduces drastically the time of processing. The processing time can thus be reduced by a factor 2 to 20 or even more depending on the number of engraving beams. Standard systems accept only one engraving beam due to the used distance detection or scanning systems.

If the proposed device is used to engrave a coating of a glazing unit, then the processed glazing unit would have the advantage that it has energy saving capabilities and it is transparent or substantially transparent to broadband EM frequencies including the ones used in telecommunications. Thus, the processed glazing unit shows a low attenuation for broadband microwave frequencies.

According to a second aspect of the invention, there is provided a laser engraving system comprising the laser engraving device according to the first aspect, and further comprising a motion system.

According to a third aspect of the invention, there is provided a method operating the laser engraving device according to the first aspect.

Other aspects of the invention are recited in the dependent claims attached hereto.

### BRIEF DESCRIPTION OF THE DRAWINGS

Other features and advantages of the invention will become apparent from the following description of a non-limiting example embodiments, with reference to the appended drawings, in which:
- Figure 1 is a simplified block diagram schematically illustrating the laser engraving device according to a first embodiment of the present invention;
- Figure 2 is a simplified block diagram schematically illustrating the laser engraving device according to a second embodiment of the present invention; and
- Figures 3a to 3g illustrate different example coating patterns that may be obtained as a result of the engraving process.

### DETAILED DESCRIPTION OF EMBODIMENTS OF THE INVENTION

Some embodiments of the present invention will now be described in detail with reference to the attached figures. The embodiments are described in the context of a laser engraving device used to post-process an insulating glazing unit for a train wagon, but the teachings of the invention are not limited to this environment. For instance, the teachings of the present invention could be used in other applications or environments, such as in buildings. Identical or corresponding functional and structural elements which appear in the different drawings are assigned the same reference numerals. It is to be noted that the use of words "first", "second" and "third", etc. may not imply any kind of particular order or hierarchy unless this is explicitly or implicitly made clear in the context. Furthermore, the word "between" when used to give a numerical range also includes the end points of the range.

The following definitions may be used in the context of the present invention:
- An insulating glazing unit (IGU) is understood to be an element comprising two or more windowpanes.
- A windowpane can be made for example of borosilicate or soda lime (float) glass and/or polymer, such as polycarbonate, acrylic glass, polyethylene terephthalate or other transparent polymers or of laminate layers or sheets of at least the above-mentioned materials.
- Lamination is a technique or process of manufacturing where a pane comprises multiple layers to form a pane so that the composite element achieves improved strength, stability, sound insulation, appearance, and/or other properties from the use of the differing materials. A laminate is a permanently assembled object created using, for example, heat, pressure, welding and/or gluing.
- Telecommunication frequencies are considered frequencies in the region from 300 MHz to 70 GHz.
- A gap in a glazing unit is the space between two adjacent panes of a glazing unit, and it can be filled with air, noble gases (e.g. argon) and/or vacuum, for example.
- A coating is a covering or a layer of material that is applied to the surface of an object, also referred to as the substrate. In general, the purpose of applying a coating may be decorative, functional, or both. The coatings referred to in this text are typically functional. The coating itself may be an all-over coating, completely covering the substrate, or it may only cover a part or parts of the substrate.
- Emissivity is the normalised value given to materials based on the ratio of heat emitted compared to a perfect black body, on a scale from zero to one. A black body would have an emissivity value of 1 and a perfect reflector would have an emissivity value of 0.
- A low emissivity coating refers to a layer that emits low levels of thermal radiation (heat). Low emissivity coatings are usually made of multiple-layer coatings of dielectric and/or metallic thin films.
- Wireless communication is the transfer of information between two or more points that are not connected by an electrical conductor, frequently over radio waves.
- Incident angle is the angle between the direction of propagation of an electromagnetic wave incident on a surface and the line perpendicular to the surface at the point of incidence, called the normal.
- Transmission loss in the context of the present invention describes the accumulated decrease in electrical power of a wave as it propagates through a certain area or through a certain type of structure.
- Multiple input, multiple output, or MIMO, is a technique for a radio link using multiple transmission and receiving antennas.
- Path loss imbalance in the context of the present invention is defined as the difference in transmission losses for different signal paths (e.g. different polarisations) of electromagnetic waves propagating through a medium.
- Plane of incidence (also called the incidence plane) may be understood to be the plane which contains the surface normal and the propagation vector (or k-vector, or wavevector) of the incoming radiation. When reflection is specular, as it is for a mirror or other shiny surface, the reflected ray also lies in the plane of incidence. When refraction also occurs, the refracted ray lies in the same plane.
- Polarisation is a property applying to transverse waves which specifies the geometrical orientation of the oscillations. An electromagnetic wave, such as light, consists of a coupled oscillating electric field and magnetic field, which are perpendicular. By convention, the polarisation of electromagnetic waves refers to the direction of the electric field. P-polarised waves are understood to have an electric field direction parallel to the plane of incidence on an object, and s-polarised waves have an electric field oriented perpendicular to that plane.

The main motivation behind the present invention was to propose a device that can be used to obtain an improved glazing design for windowpanes, especially in situations in which the glazing unit has already been placed in its final installation location. The windowpanes should not only satisfy mechanical and tension requirements, but they should also provide low attenuation for broadband frequencies and optionally an advantageous path loss imbalance, particularly between the s (perpendicular) and p (parallel) polarisations, for a wide range of angles of incidence and broadband frequencies used for wireless telecommunication. The insulating glazing unit or window is typically assembled from two or more windowpanes. Each windowpane may contain polymer, such as polycarbonate or acrylic glass, and/or glass. A structured or patterned coating with low thermal emissivity, i.e., an emissivity value below 20% or approximately 20% (usually named low-e coating), applied to one or more surfaces of the glazing unit generally results in low attenuation for broadband microwave frequencies and optionally also in a small path loss imbalance between parallel and perpendicular polarisations, which may improve MIMO efficiency.

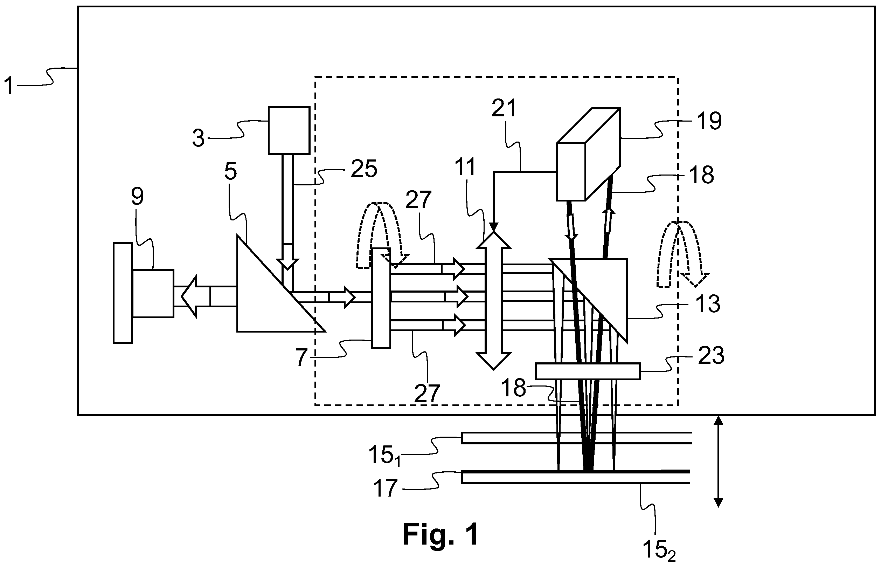

Figure 1 schematically illustrates the laser engraving device 1, apparatus or optical auto-focusing system for multiple laser beam processing, also referred to as a laser head, according to the first embodiment of the present invention. A laser source 3 or isolator, which may or may not be part of the laser head 1, is provided to generate a light or laser beam, also referred to as a processing laser beam or working laser beam 25, that is directed to a first mirror, which in this case is a dichroic mirror 5, also known as a dichroic filter. The laser source (where the letters in the word stand for "Light Amplification by Stimulated Emission of Radiation" is configured to produce a very narrow beam of light. In the produced narrow beam of light all of the light waves have very similar wavelengths. The laser's light waves travel together with their peaks all lined up, or in phase. This is why laser beams are very narrow, very bright, and can be focused into a very tiny spot. A dichroic mirror is a thin-film filter or interference filter, which operates as a very accurate colour filter used to selectively pass light of a small range of colours while reflecting other colours. In other words, the dichroic mirror 5 is configured to reflect the incoming laser beam from the laser source towards a beam splitter 7, beam multiplier or beam divider, while it allows a visible light beam reflected from the target surface to pass through it towards an optional vision system 9, which the user or technician may use to visually inspect the progress or quality of the engraving process.

The beam splitter 7 is an optical device that is configured to split a beam of light in two or more beams of light. In this specific example, the beam splitter is a diffractive beam splitter, also known as a multi-spot beam generator or an array beam generator, which is a single optical element that divides an input beam into N output beams. Each output beam retains the same optical characteristics as the input beam, such as size, polarisation and phase. A diffractive beam splitter can generate either a 1-dimensional beam array (1 x N) or a 2-dimensional beam matrix (M x N), depending on the diffractive pattern on the optical element. The diffractive beam splitter is used with monochromatic light such as a laser beam, and is designed for a specific wavelength and angle of separation between output beams. In the present example, the number of generated beams is between 2 and 20, or it could more specifically be between 6 and 20. These output beams are in the following text also referred to as engraving beams 27.

The laser head 1 further comprises a first optical focusing element 11 in the path of the beams coming from the beam splitter 7. The first focusing element is used to adjust the focal point of the laser beams that travel through it to minimise defocus aberration. The focusing element may comprise a lens, such as a mechanically movable lens, or alternatively, a tunable lens, also called a liquid lens, may be used. In the configuration of Figure 1, the laser head 1 also comprises a second mirror 13, which may be a state-of-the art mirror to redirect the incoming engraving laser beams towards the target surface.

In the example of Figure 1, the glazing unit comprises two windowpanes, namely a first windowpane 15₁ and a second windowpane 15₂. However, the glazing unit could comprise any number of panes. These windowpanes are arranged in this example so that the engraving beams first traverse the first windowpane 15₁ before reaching the second windowpane 15₂. In this specific configuration, the coating 17 to be engraved, and which thus also has the target surface, is placed on the inner surface of the second windowpane. In other words, the exposed surface of the coating is facing the gap between the first and second windowpanes. However, it is to be noted that the coating to be engraved could be placed on any surface of any one of the windowpanes, and the proposed laser head 1 would be able to engrave it. The gap may be filled with gas, such as air or argon, to improve the thermal and/or acoustic noise insulating properties of the glazing unit. The windowpanes are typically laminated elements. More specifically, they comprise at least two layers attached, bonded, fixed or glued together, but they may be one-layer panes instead. For example, a polymer layer is often sandwiched and bonded between two glass layers. The double ended arrow next to the windowpanes in Figure 1 indicates the focusing range of the first optical focusing element 11.

As is further shown in Figure 1, the laser head 1 also comprises a distance measurement device or distance sensor 19, which in this example is an optical sensor, or more specifically an optical distance sensor. The optical distance sensor is configured to measure the distance between the optical distance sensor and the target surface 17 by emitting a measurement beam or light 18 and by detecting the position of the reflected beam or light on the target surface 17. In this manner, the distance between the optical distance sensor and any of the reflecting surfaces may be detected. More specifically, the distance measurement is based on the triangulation principle. The measurement (laser) beam strikes the target surface as a small point. The receiver of the sensor (photodiode line) detects the position of this point. The angle of incidence changes according to the distance, and thereby the position of the laser point on the receiver. The photodiode line is read by an integrated microcontroller. The controller accurately calculates the angle from the light distribution on the photodiode line and then calculates the distance to the object from this. This distance is either issued at the serial port or converted into an output current proportional to the distance. The microcontroller guarantees a high degree of linearity and measuring precision. However, instead of using an optical distance sensor, an optical displacement sensor can be used for this application. The principle of laser displacement sensor ranging is a method where triangulation is applied by combining the emitting element and the position sensitive device (PSD) of the laser displacement sensor to perform ranging (detecting the amount of displacement). As is shown in Figure 1, the distance sensor 19 is connected to the first optical focusing element 11 by a data link 21, which is, according to the present invention, a wire data connection, such as an electrical conductor, or a wireless data connection.

The laser head 1 optionally also comprises a second optical focusing element 23, which in this example is a fisheye lens, and more specifically an f-theta lens, also known as a flat lens or a scanning lens, which is a type of fisheye lens. The f-theta lenses are designed to produce a focused spot in a flat field, the position of the spot being proportional to the focal length (f) of the lens and the angle (theta) of the beam entering the lens, giving them the name f-theta lenses. Ideally the size of the focused spot is constant throughout the field. As shown in Figure 1, in the present configuration, the optional f-theta lens 23 is placed in the path of the engraving beams 27 to focus the different beams in the same plane (instead of them being focused on a sphere). Of the elements described above, the second optical focusing element 23 is the element closest to the coating to be engraved.

The laser head 1 may be placed on a motion system (not illustrated in the drawings), such as a robotic arm, that may be configured to rotate around any number of rotation axes, such as around three orthogonally arranged rotation axes. Furthermore, the motion system may be configured to translate the laser head 1 in any desired direction, optionally to move the laser linearly in the desired direction. Optionally, the beam splitter 7 is also arranged to rotate around one or more rotation axes. In this example, the beam splitter is arranged to rotate around a rotation axis, which is parallel or substantially parallel to the direction of the processing laser beam 25 entering the beam splitter 7. Optionally, a sub-entity formed by the beam splitter 7, the first optical focusing element 11, the second mirror 13, and the second optical focusing element 23 is also arranged to rotate around one or more rotation axes. In this example, the sub-entity is arranged to rotate around a rotation axis, which is parallel or substantially parallel to the direction of the engraving beams 27 traversing the first optical focusing element 11. In other words, the rotation axis of the beam splitter 7 would in this case coincide with the rotation axis of the sub-entity.

The operation of the laser head 1 is next explained in more detail. The laser head 1 is first placed in its desired start position and then the processing laser beam 25 is generated and directed to the dichroic mirror 5. The processing beam is reflected by the dichroic mirror 5 towards the beam splitter 7, which divides the processing beam into a given number of parallel engraving beams 27 or divided processing beams. The engraving beams 27 then propagate through the first optical focusing element 11 which dynamically adjusts its focal point based on the distance information received from the distance sensor 19. In this manner the engraving beams can be precisely focused on the target surface 17. To achieve this, the distance sensor 19 repeatedly, i.e., at given time intervals tracks the distance between the distance sensor and the target surface, which in this case is the surface of the coating 17. It is to be noted that the term "time interval" does not necessarily have to be a constant time interval, i.e. a constant time period, but it may instead be a non-constant time interval. In other words, the word "repeatedly" in the present description is understood to mean taking a given action a plurality of times, or "again and again" at regular or irregular time intervals. The distance sensor may receive as an initial input e.g. from the user of the laser head the position of the coating within the glazing unit, i.e., at which interface the coating is placed. Alternatively, the distance sensor determines the location of the coating by analysing the reflected wavelengths from the different interfaces of the glazing unit. In this example, the response time of the distance sensor 19 is between 0.5 µs and 20 µs or more specifically between 0.5 µs and 10 µs, or between 1 µs and 3 µs. The response time thus indicates how often the distance measurements can be taken and how often the distance information can be updated. The propagating engraving laser beams 27 are directed by the second mirror 13 towards the coating 17. Before the engraving laser beams reach the target surface, they propagate through the second optical focusing element 23, which refocuses the engraving beams so that they are all focused on one plane (i.e. the surface of the coating 17).

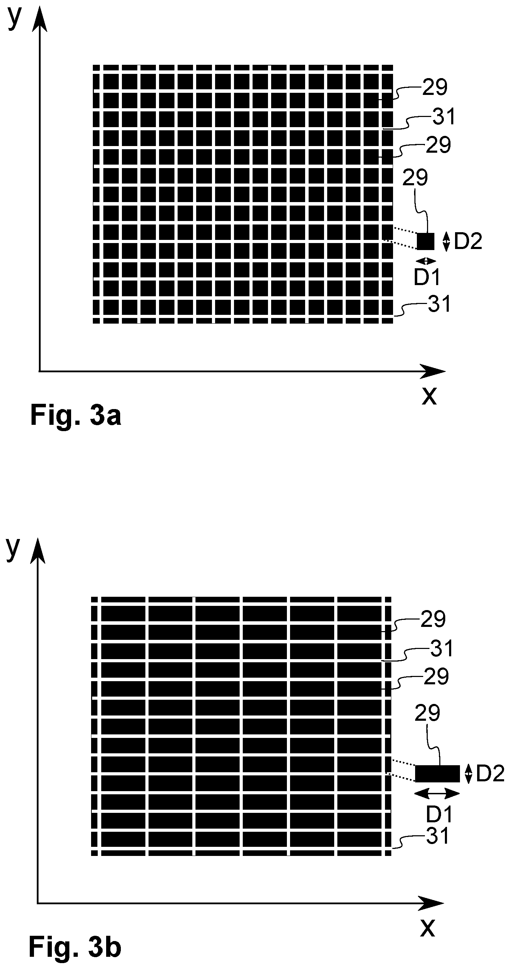

As mentioned above, the distance sensor 19 is arranged to communicate with the first optical focusing element 11 at given time intervals. These time intervals may be the same as the ones used for taking distance measurements. The first optical focusing element 11 then repeatedly adjusts its focal point depending on the received distance information. More specifically, if the distance sensor detects that the distance increases to the coating 17, then also the focal point of the first focusing element is moved further away from the laser head, or vice versa. In this manner, the focal point follows the surface of the coating. Here again the adjustment time intervals may be the same as the distance measurement time intervals. However, this does not have to be the case. It is to be noted that during the above engraving process, the laser head 1 moves along a pre-programmed path to generate the desired pattern on the coating 17. More specifically, thanks to the engraving process, the desired pattern of electrically conductive patches 29 (as shown in Figures 3a to 3g), which are electrically insulated from each other, can be generated to minimise the attenuation.

Visible light gets then reflected from the coating 17. This light is then reflected by the second mirror 13 towards the dichroic mirror 5, which allows the light to pass through it to reach the vision system 9, such as a camera. The vision system 9 is aligned with the path of the incoming light beam and thus the technician can visually monitor the engraving process. Alternatively, or in addition, the vision system 9 may comprise an image recognition software tool to implement a computer-implemented monitoring framework of the engraving process.

The end result of the engraving process is thus a patterned coating, which advantageously has low thermal emissivity (a low-e coating). The coating may, for example, comprise a metal layer, such as a silver layer (to make it a silver-based coating), sandwiched between two oxide or dielectric layers, which may be any one of the following layers: zinc oxide (ZnO), silicon nitride (Si3N4), and titanium dioxide (TiO2) layers. The coating may be deposited onto a desired surface by applying sputter deposition, which is a physical vapour deposition (PVD) method of thin film deposition by sputtering. Alternatively, the coating may be a pyrolytic coating, which is a thin film coating applied at high temperatures and sprayed onto a glass surface, during the float glass process. The cross-sectional thickness of the transparent coating may be between 10 nm and 1000 nm, or more specifically between 50 nm and 300 nm, or more specifically between 100 nm and 200 nm.

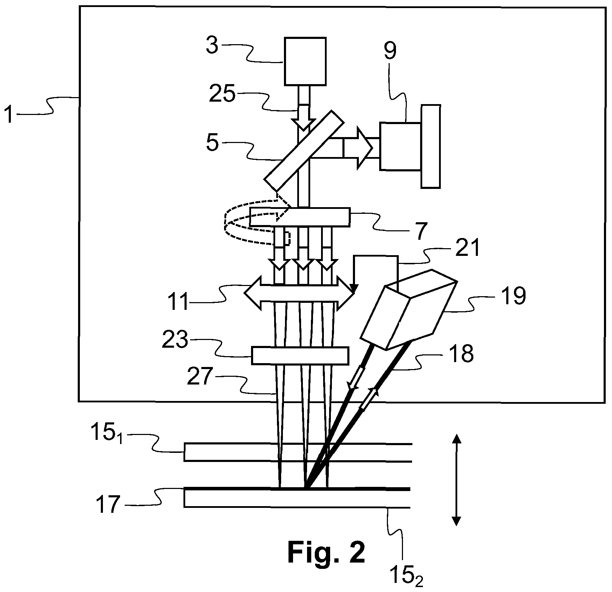

Figure 2 schematically illustrates the laser head 1 according to the second embodiment of the present invention. The laser head according to the second embodiment is rather similar to the laser head of the first embodiment, but in the present embodiment, the second mirror is not needed. Furthermore, the distance sensor 19 is placed laterally on one side of the first optical element 11 and/or the second optical element 23. In this manner it can be placed sufficiently close to the target surface 17. The distance between the sensor measurement area and the treatment area (i.e., the target surface) is advantageously less than 20 mm, or more specifically less than 10 mm. Moreover, the laser source 3 is in this embodiment aligned with the processing laser beam 25 and the engraving laser beam 27.

Thus, in view of the above, the present invention proposes a laser processing head 1 allowing a real-time or substantially real-time adjustment of the focal points of the engraving beams 27, i.e., a real-time optical focus of multiple beams. The proposed solution is especially suitable for laser treatment of transparent conductive coatings in an assembled double/triple/curved, etc. glazing unit. By laser-treating the conductive coating(s) 17, a high transmittance for electromagnetic waves in the mobile communication spectrum can be achieved, while maintaining a low thermal emissivity, which is necessary for good thermal insulation by removing a small percentage of the total surface area of the coating, i.e., advantageously less than 20% or more specifically less than 5% of the total surface area. However, the teachings of the present invention may also be used for any other laser treatment, such as marking, engraving, etc. (e.g. a photovoltaic laser fired contact).

The first optical focal element 11, which may be composed of a composition of fast movable lenses or one or more tunable lenses, is controlled by using the signal from the distance sensor 19 measuring the distance from the distance sensor to the target surface 17 to be engraved. The distance measurement is performed with a fast response time, e.g. up to 200 kHz, in close vicinity of the laser treatment region, which is at least partially defined by the target surface, and which can be achieved through one or more transparent layers 15₁, 15₂, i.e. the windowpanes. The beam splitter 7, which may be a holographic/diffractive beam splitter, allows the number of processing laser beams to be multiplied to reduce the overall surface treatment time. The beam splitter 7 is advantageously rotated to follow the direction of movement of the laser head 1. This can be implemented for example so that the wavefront formed by the engraving laser beams is at an acute angle with respect to the movement direction of the laser head 1. The angle may for instance be substantially 90°. In other words, the wavefront would be substantially orthogonal to the direction of movement of the laser head 1. For this purpose, a data communication link may also be provided between the first optical focusing element 11 and the motion system so that the first optical focusing element may be rotated based on the movement information received from the motion system. Furthermore, the laser head 1 composed of the above-cited components can be rotated to follow a curved or tilted surface.

To summarise the above teachings, the present invention according to one example has the following elements or features:
- A combination of one or more engraving beams 27 and a measurement beam 18 to allow the distance measurement;
- High speed distance measurement in proximity of the engraving region (a few millimetres);
- The optical distance sensor 19 allows the position of the interface between any two panes to be determined;
- Fast response time (e.g. 1 kHz or more) of the first optical focusing element 11, which is used to position the laser spot on the chosen interface or surface, detected by the distance sensor 19;
- The beam splitter 7 multiplies the incoming processing laser beam 25 to obtain e.g. 2 to 20 engraving beams 27, or even more;
- The beam splitter 7 is rotary to change the axes of the engraving beams 27;
- An f-theta lens 23 may be placed in the beam path to focus the different engraving beams 27 onto the same plane;
- The laser head 1 can be rotated (e.g. ±45°), preferably around the processing laser beam axis, to maintain the laser head 1 perpendicular to the surface, and to treat curved or tilted surfaces;
- The wavelengths used for the engraving beams 27 and the measurement beams 18 are advantageously different from each other to avoid interference (e.g. if both the engraving beams 27 and the measurement beams 18 are detected by the distance sensor 19; and
- The dichroic mirror 5 can be used to place the vision system 9 in line of the engraving beams to control the process.

Figures 3a to 3g illustrate examples of different engraved patterns for the structured coating 17. The patterns are illustrated in the examples of Figures 3a to 3g in a coordinate system, where the x-axis represents the horizontal axis (with respect to the ground), and the y-axis represents an axis which is orthogonal to the x-axis and follows the surface of the coating or more specifically the surface of a coating patch 29. Thus, if the glazing unit is placed vertically, then the y-axis is a vertical axis. D1 denotes a first dimension D1, which in this example is parallel to the x-axis, while D2 denotes a second, orthogonal dimension, which in this example is parallel to the y-axis. The black regions correspond to the coating patches 29, while the white regions show trenches 31, channels, or ditches made to the respective coating by the engraving process. In this manner a laser-structured coating can be obtained, where the thermal emissivity of the coating is preferably at most approximately 20%, or more specifically at most approximately 15%. In this example, the trenches extend cross-sectionally through the coating, and thus the trenches reach the surface of the layer underneath. The trenches thus electrically separate different electrically conductive cells, patches or regions formed in the coating from each other. The ablated area (i.e., the surface area of the trenches 31) is kept small thanks to very narrow ablated lines. Furthermore, as the lines are very small, the structure is hardly seen by the naked eye in most situations. It has been discovered that good results are obtained if the patches are separated from each other by a distance in the range of 0.001 mm to 0.5 mm, and more specifically by distance in the range of 0.01 mm to 0.1 mm.

In view of the above, a length or a length projection of one or more patches 29 along a first axis is greater than a height or a height projection of the one or more patches 29 along a second, different axis, wherein the first axis substantially horizontally follows a respective patch surface or its virtual extension, and the second axis follows the respective patch surface or its virtual extension orthogonally to the first axis. The first axis may be a horizontal axis, and the second axis may be a vertical axis.

Figure 3a shows patches 29 that have a square shape. Instead, or in addition, the patches could have other regular shapes, such as triangles or circles. As can be seen in Figures 3b to 3g, the patches 29 are in these examples made elongated and they thus define a longitudinal axis along which the patches 29 extend (for instance, in the example of Figure 3b, the length axis is parallel to the x-axis). In other words, their first dimension D1 is greater than a second, orthogonal or substantially orthogonal dimension D2. In the examples of Figures 3b to 3g, the first dimension D1 extends along the x-axis, which in this example is a horizontal axis, while the second dimension D2 extends along the y-axis, which is orthogonal to the x-axis, and is often a vertical axis, but not always (in particular when the coating 17 is not oriented vertically but would be curved or tilted with respect to the vertical orientation). Both the x-axis and y-axis are parallel to the coated surface. The first and second dimensions may thus be understood to extend tangentially along the patch surface.

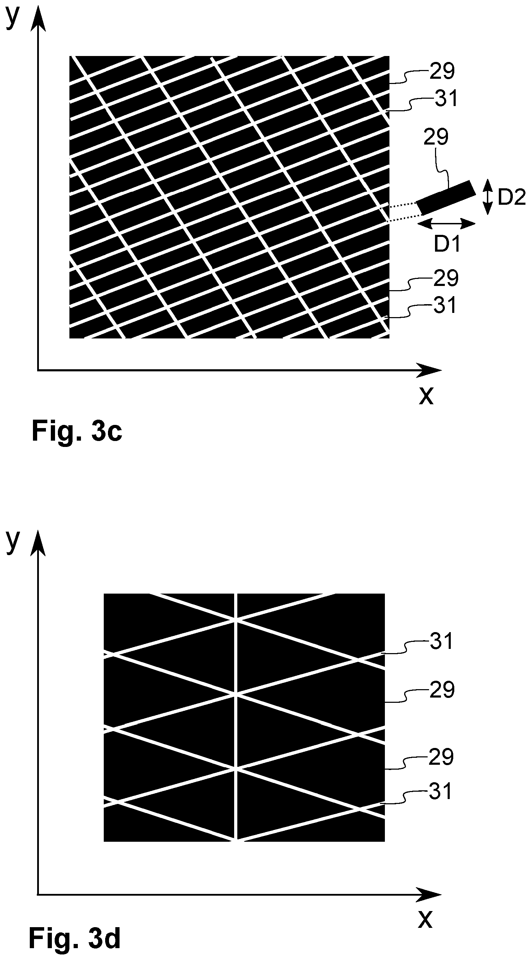

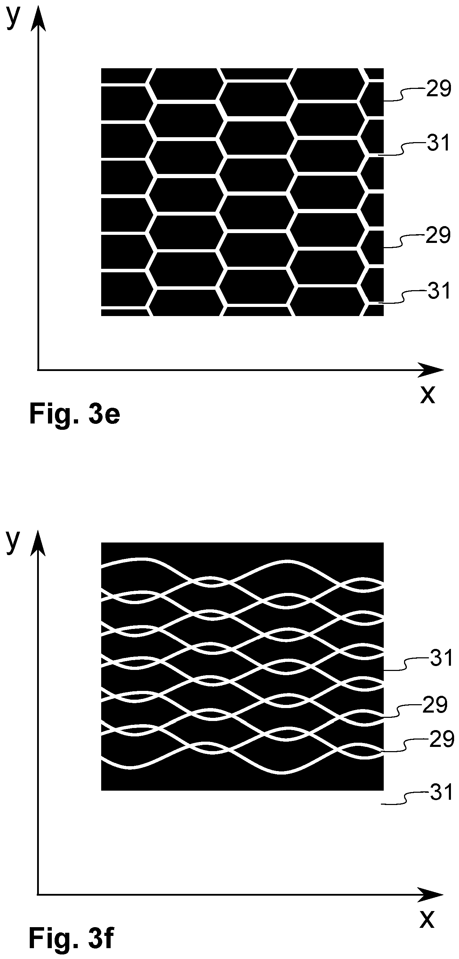

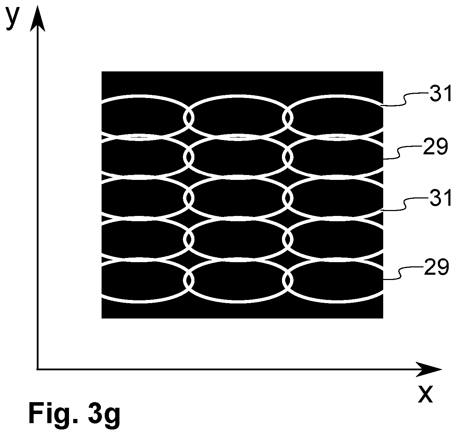

In the design of Figure 3b, the patches 29 are rectangles, and more specifically elongated rectangles, while in the design of Figure 3c, the patches 29 are tilted elongated rectangles or they could be rhomboids. In the design of Figure 3d, the patches 29 are triangles, while in the design of Figure 3e, the patches 29 are hexagons, and more specifically non-regular or elongated hexagons. In Figure 3f, waveforms are used to create the patches 29 while in Figure 3g, oval shapes are used to create the patches 29. More specifically, in the design of Figure 3f, first waveforms cross second waveforms to create patches of different sizes. In the design of Figure 3g, partially overlapping ovals are used to create patches of different sizes. It is to be noted other shapes would also or instead be possible, such as parallelograms or tilted parallelograms. The patch length/height ratio may be between 1 to 20, or more specifically between 1 and 8, or 1.5 and 8. Furthermore, at least some of the patches have a length in the range of 0.5 mm to 20 mm, and more specifically in the range of 0.5 mm to 10 mm, or in the range of 0.5 mm to 5 mm.

It is to be noted that the trajectory of the laser head is advantageously pre-programmed depending on the desired pattern shape. For example, the ditch lines that are parallel to each other can be first engraved with one or more laser head movements, and then the laser head may be reoriented, for instance by rotating it by 90 degrees (or by any desired amount) to engrave ditch lines having a different orientation.

While the invention has been illustrated and described in detail in the drawings and foregoing description, such illustration and description are to be considered illustrative or exemplary and not restrictive, the invention being not limited to the disclosed embodiments, but rather more by the appended claims.

## Claims

1. A laser engraving device (1) for engraving a target surface (17), the laser engraving device (1) comprising:
- a beam splitter (7) for dividing a processing laser beam (25) into a plurality of engraving laser beams (27); and
- a first optical focusing element (11) with an adjustable focal point for focusing the plurality of engraving laser beams (27) onto the target surface (17),
the laser engraving device (1) being **characterised in that** it comprises:
- an optical sensor (19) configured to determine the distance between the target surface (17) and the optical sensor (19),
wherein the first optical focusing element (11) is connected to the optical sensor (19) by a data link (21), which is a wire data connection or a wireless data connection, to receive the determined distance from the optical sensor (19), and wherein the optical sensor (19) is configured to determine the distance at given measurement time intervals, and the first optical focusing element (11) is configured to adjust its focal point at given adjustment time intervals based on the determined distance received from the optical sensor (19).

2. The laser engraving device (1) according to claim 1, wherein the measurement time interval and/or the adjustment time interval is at most 20 µs, or more specifically at most 10 µs, or at most 3 µs, and wherein the optical sensor (19) is configured to feed the determined distance values to the first optical focusing element (11) via the data link (21).

3. The laser engraving device (1) according to any one of the preceding claims, wherein the laser engraving device (1) further comprises a second optical focusing element (23) placed in the path of the plurality of the engraving laser beams (27), and configured to focus the plurality of the engraving laser beams (27) onto one plane, and/or wherein the optical sensor (19) is an optical distance sensor or an optical displacement sensor.

4. The laser engraving device (1) according to any one of the preceding claims, wherein the laser engraving device (1) further comprises a first mirror (5), and wherein the first mirror (5) is a dichroic mirror (5) configured to redirect the incoming processing laser beam (25) towards the beam splitter (7), while allowing a reflected light from the target surface (17) to pass through the dichroic mirror (5) without redirecting it, or the dichroic mirror (5) is configured to redirect the reflected laser beam from the target surface (17), while allowing the incoming processing laser beam (25) to pass through the dichroic mirror (5) without redirecting it.

5. The laser engraving device (1) according to any one of the preceding claims, wherein the laser engraving device (1) further comprises a vision system (9) placed in the path of a laser beam reflected from the target surface (17), and/or wherein the laser engraving device (1) is configured to be rotated about one or more rotation axes and/or translate in one or more directions.

6. The laser engraving device (1) according to any one of the preceding claims, wherein the first optical focusing element (11) is configured to be rotated about one or more rotation axes.

7. The laser engraving device (1) according to claim 6, wherein the rotation direction depends on the direction of movement of the laser engraving device (1), and/or wherein the first optical focusing element (11) is configured to be rotated so that a wavefront formed by at least some of the engraving laser beams (27) is at an acute angle with respect to the direction of movement of the laser engraving device (1).

8. The laser engraving device (1) according to any one of the preceding claims, wherein the optical sensor (19) is configured to determine the distance to the target surface (17) through one or more intermediate surfaces placed between the optical sensor (19) and the target surface (17) to allow the optical focusing element (11) to focus the plurality of engraving laser beams (27) onto the target surface (17) through the one or more intermediate surfaces.

9. The laser engraving device (1) according to any one of the preceding claims, wherein the optical sensor (19) is configured to repeatedly determine at said given measurement time intervals the distance between the target surface (17) and the optical sensor (19), wherein the first optical focusing element (11) is configured to repeatedly receive at said given measurement time intervals the determined distance from the optical sensor (19), and wherein the first optical focusing element (11) is configured to repeatedly adjust at said given adjustment time intervals its focal point based on the determined distance received from the optical sensor (19).

10. The laser engraving device (1) according to any one of the preceding claims, wherein the number of the engraving laser beams (27) is between 2 and 20, or more specifically between 6 and 10, and wherein the engraving laser beams (27) are arranged in an M × N beam matrix array, where at least M or N is greater than 1, or where M and N are both greater than 1.

11. The laser engraving device (1) according to any one of the preceding claims, wherein the optical sensor (19) is configured to generate one or more measurement beams (18) having a first wavelength, and wherein the first wavelength is different from a second wavelength of the engraving laser beams (27), and/or wherein the laser engraving device (1) further comprises a laser source (3) configured to generate the processing laser beam (25).

12. The laser engraving device (1) according to any one of the preceding claims, wherein the laser engraving device (1) is programmed to move along one or more trajectories to allow elongated patches (29) to be formed on the target surface (17) such that the elongated patches (29) are electrically insulated from each other as result of the engraving process.

13. The laser engraving device (1) according to any one of the preceding claims, wherein the optical sensor measurement area is located within at most 20 mm, or more specifically within at most 10 mm from the target surface (17).

14. A laser engraving system comprising the laser engraving device (1) according to any one of the preceding claims, and further comprising a motion system configured to move the laser engraving device (1) along one or more trajectories and/or to rotate the laser engraving device (1) about one or more rotation axes, and wherein the laser engraving system further comprises a glazing unit comprising one or more transparent windowpanes (15₁, 15₂) and the target surface (17) as part of an electrically conductive coating of the glazing unit.

15. A method of engraving a target surface (17) by using a laser engraving device (1), the method being **characterised by** the following:
- a beam splitter (7) for dividing a processing laser beam (25) into a plurality of engraving laser beams (27);
- a first optical focusing element (11) with an adjustable focal point for focusing the plurality of engraving laser beams (27) onto the target surface (17); and
- an optical sensor (19) configured to determine at given measurement time intervals the distance between the target surface (17) and the optical sensor (19),
wherein the first optical focusing element (11) is connected to the optical sensor (19) by a data link (21), which is a wire data connection or a wireless data connection, to receive the determined distance from the optical sensor (19), and the first optical focusing element (11) is configured to adjust its focal point based on the determined distance received from the optical sensor (19), and wherein the method comprises:
- generating the processing laser beam (25);
- directing the generated processing laser beam (25) to the beam splitter (7); and
- moving the laser engraving device (1) along one or more pre-programmed trajectories to allow a desired pattern to be formed on the target surface (17) as a result of the engraving process while adjusting the focal point of the first optical focusing element (11) at given adjustment time intervals based on the determined distance received from the optical sensor (19).

## Patentansprüche

1. Eine Lasergraviervorrichtung (1) zum Gravieren einer Zieloberfläche (17), wobei die Lasergraviervorrichtung (1) umfasst:
- einen Strahlteiler (7) zum Aufteilen eines Bearbeitungslaserstrahls (25) in mehrere Gravierlaserstrahlen (27); und
- ein erstes optisches Fokussierelement (11) mit einstellbarem Brennpunkt zum Fokussieren der mehreren Gravierlaserstrahlen (27) auf die Zieloberfläche (17),
wobei die Lasergraviervorrichtung (1) **dadurch gekennzeichnet ist, dass** sie umfasst:
- einen optischen Sensor (19), der konfiguriert ist, um den Abstand zwischen der Zieloberfläche (17) und dem optischen Sensor (19) zu bestimmen,
wobei das erste optische Fokussierelement (11) durch eine Datenverbindung (21), die eine Drahtdatenverbindung oder eine drahtlose Datenverbindung ist, mit dem optischen Sensor (19) verbunden ist, um den bestimmten Abstand von dem optischen Sensor (19) zu empfangen, und wobei der optische Sensor (19) konfiguriert ist, um den Abstand zu gegebenen Messzeitintervallen zu bestimmen, und das erste optische Fokussierelement (11) konfiguriert ist, um seinen Brennpunkt zu gegebenen Einstellzeitintervallen basierend auf dem bestimmten Abstand, der von dem optischen Sensor (19) empfangen wird, einzustellen.

2. Die Lasergraviervorrichtung (1) nach Anspruch 1, wobei das Messzeitintervall und/oder das Einstellzeitintervall höchstens 20 µs oder insbesondere höchstens 10 µs oder höchstens 3 µs beträgt, und wobei der optische Sensor (19) dazu eingerichtet ist, die ermittelten Abstandswerte über die Datenverbindung (21) dem ersten optischen Fokussierelement (11) zuzuführen.

3. Die Lasergraviervorrichtung (1) nach einem der vorhergehenden Ansprüche, wobei die Lasergraviervorrichtung (1) ferner ein zweites optisches Fokussierelement (23) umfasst, das in dem Pfad der Vielzahl der Gravierlaserstrahlen (27) angeordnet ist und konfiguriert ist, um die Vielzahl der Gravierlaserstrahlen (27) auf eine Ebene zu fokussieren, und/oder wobei der optische Sensor (19) ein optischer Abstandssensor oder ein optischer Wegsensor ist.

4. Die Lasergraviervorrichtung (1) nach einem der vorhergehenden Ansprüche, wobei die Lasergraviervorrichtung (1) ferner einen ersten Spiegel (5) umfasst, und wobei der erste Spiegel (5) ein dichroitischer Spiegel (5) ist, der konfiguriert ist, um den eingehenden Bearbeitungslaserstrahl (25) in Richtung des Strahlteilers (7) umzuleiten, während es einem reflektierten Licht von der Zieloberfläche (17) ermöglicht wird, durch den dichroitischen Spiegel (5) zu gelangen, ohne es umzuleiten, oder der dichroitische Spiegel (5) konfiguriert ist, um den reflektierten Laserstrahl von der Zieloberfläche (17) umzuleiten, während es dem eingehenden Verarbeitungslaserstrahl (25) ermöglicht wird, durch den dichroitischen Spiegel (5) zu gelangen, ohne ihn umzuleiten.

5. Die Lasergraviervorrichtung (1) nach einem der vorhergehenden Ansprüche, wobei die Lasergraviervorrichtung (1) ferner ein Sichtsystem (9) umfasst, das in dem Pfad eines von der Zieloberfläche (17) reflektierten Laserstrahls angeordnet ist, und/oder wobei die Lasergraviervorrichtung (1) konfiguriert ist, um eine oder mehrere Rotationsachsen gedreht zu werden und/oder sich in eine oder mehrere Richtungen zu bewegen.

6. Die Lasergraviervorrichtung (1) nach einem der vorhergehenden Ansprüche, wobei das erste optische Fokussierelement (11) konfiguriert ist, um eine oder mehrere Rotationsachsen gedreht zu werden.

7. Die Lasergraviervorrichtung (1) nach Anspruch 6, wobei die Drehrichtung von der Bewegungsrichtung der Lasergraviervorrichtung (1) abhängt, und/oder wobei das erste optische Fokussierelement (11) so konfiguriert ist, dass es gedreht wird, so dass eine Wellenfront, die durch mindestens einen Teil der Gravierlaserstrahlen (27) gebildet wird, in einem spitzen Winkel in Bezug auf die Bewegungsrichtung der Lasergraviervorrichtung (1) ist.

8. Die Lasergraviervorrichtung (1) nach einem der vorhergehenden Ansprüche, wobei der optische Sensor (19) konfiguriert ist, um den Abstand zu der Zieloberfläche (17) durch eine oder mehrere Zwischenflächen zu bestimmen, die zwischen dem optischen Sensor (19) und der Zieloberfläche (17) angeordnet sind, um es dem optischen Fokussierelement (11) zu ermöglichen, die Vielzahl von Gravierlaserstrahlen (27) durch die eine oder die mehreren Zwischenflächen auf die Zieloberfläche (17) zu fokussieren.

9. Die Lasergraviervorrichtung (1) nach einem der vorhergehenden Ansprüche, wobei der optische Sensor (19) konfiguriert ist, wiederholt zu den gegebenen Messzeitintervallen den Abstand zwischen der Zieloberfläche (17) und dem optischen Sensor (19) zu bestimmen, wobei das erste optische Fokussierelement (11) konfiguriert ist, um wiederholt zu den gegebenen Messzeitintervallen den bestimmten Abstand von dem optischen Sensor (19) zu empfangen, und wobei das erste optische Fokussierelement (11) konfiguriert ist, um wiederholt zu den gegebenen Einstellzeitintervallen seinen Brennpunkt basierend auf der bestimmten Entfernung, die von dem optischen Sensor (19) empfangen wird, einzustellen.

10. Die Lasergraviervorrichtung (1) nach einem der vorhergehenden Ansprüche, wobei die Anzahl der Gravierlaserstrahlen (27) zwischen 2 und 20 oder insbesondere zwischen 6 und 10 liegt, und wobei die Gravierlaserstrahlen (27) in einem M × N-Strahlmatrixarray angeordnet sind, wobei mindestens M oder N grösser als 1 ist, oder wobei M und N beide grösser als 1 sind.

11. Die Lasergraviervorrichtung (1) nach einem der vorhergehenden Ansprüche, wobei der optische Sensor (19) konfiguriert ist, um einen oder mehrere Messstrahlen (18) mit einer ersten Wellenlänge zu erzeugen, und wobei die erste Wellenlänge von einer zweiten Wellenlänge der Gravierlaserstrahlen (27) verschieden ist, und/oder wobei die Lasergraviervorrichtung (1) ferner eine Laserquelle (3) umfasst, die konfiguriert ist, um den Bearbeitungslaserstrahl (25) zu erzeugen.

12. Die Lasergraviervorrichtung (1) nach einem der vorhergehenden Ansprüche, wobei die Lasergraviervorrichtung (1) dazu programmiert ist, sich entlang einer oder mehrerer Trajektorien zu bewegen, um zu ermöglichen, dass längliche Patches (29) auf der Zieloberfläche (17) ausgebildet werden, so dass die länglichen Patches (29) durch den Gravierprozess elektrisch voneinander isoliert sind.

13. Die Lasergraviervorrichtung (1) nach einem der vorhergehenden Ansprüche, wobei der optische Sensormessbereich innerhalb von höchstens 20 mm oder insbesondere innerhalb von höchstens 10 mm von der Zieloberfläche (17) angeordnet ist.

14. Ein Lasergraviersystem, das die Lasergraviervorrichtung (1) nach einem der vorhergehenden Ansprüche umfasst, und ferner umfassend ein Bewegungssystem, das konfiguriert ist, um die Lasergraviervorrichtung (1) entlang einer oder mehrerer Trajektorien zu bewegen und/oder die Lasergraviervorrichtung (1) um eine oder mehrere Rotationsachsen zu drehen, und wobei das Lasergraviersystem ferner eine Verglasungseinheit umfasst, die eine oder mehrere transparente Fensterscheiben (15₁, 15₂) und die Zieloberfläche (17) als Teil einer elektrisch leitfähigen Beschichtung der Verglasungseinheit umfasst.

15. Ein Verfahren zum Gravieren einer Zieloberfläche (17) unter Verwendung einer Lasergraviervorrichtung (1), wobei das Verfahren durch Folgendes gekennzeichnet ist:
- einen Strahlteiler (7) zum Aufteilen eines Bearbeitungslaserstrahls (25) in mehrere Gravierlaserstrahlen (27);
- ein erstes optisches Fokussierelement (11) mit einstellbarem Brennpunkt zum Fokussieren der mehreren Gravierlaserstrahlen (27) auf die Zieloberfläche (17); und
- einen optischen Sensor (19), der konfiguriert ist, um zu bestimmten Messzeitintervallen den Abstand zwischen der Zieloberfläche (17) und dem optischen Sensor (19) zu bestimmen,
wobei das erste optische Fokussierelement (11) mit dem optischen Sensor (19) durch eine Datenverbindung (21) verbunden ist, die eine Drahtdatenverbindung oder eine drahtlose Datenverbindung ist, um den bestimmten Abstand von dem optischen Sensor (19) zu empfangen, und das erste optische Fokussierelement (11) konfiguriert ist, um seinen Brennpunkt basierend auf dem bestimmten Abstand, der von dem optischen Sensor (19) empfangen wird, einzustellen, und wobei das Verfahren umfasst:
- Erzeugen des Bearbeitungslaserstrahls (25);
- Richten des erzeugten Bearbeitungslaserstrahls (25) auf den Strahlteiler (7); und
- Bewegen der Lasergraviervorrichtung (1) entlang einer oder mehrerer vorprogrammierter Trajektorien, um zu ermöglichen, dass ein gewünschtes Muster auf der Zieloberfläche (17) als ein Ergebnis des Gravierprozesses gebildet wird, während der Brennpunkt des ersten optischen Fokussierelements (11) in gegebenen Einstellzeitintervallen basierend auf dem bestimmten Abstand, der von dem optischen Sensor (19) empfangen wird, eingestellt wird.

## Revendications

1. Un dispositif de gravure au laser (1) pour graver une surface cible (17), le dispositif de gravure au laser (1) comprenant :
- un diviseur de faisceau (7) pour diviser un faisceau laser de traitement (25) en une pluralité de faisceaux laser de gravure (27) ; et
- un premier élément de focalisation optique (11) avec un point focal ajustable pour focaliser la pluralité de faisceaux laser de gravure (27) sur la surface cible (17),
le dispositif de gravure au laser (1) étant **caractérisé en ce qu'**il comprend :
- un capteur optique (19) configuré pour déterminer la distance entre la surface cible (17) et le capteur optique (19),
dans lequel le premier élément de focalisation optique (11) est connecté au capteur optique (19) par une liaison de données (21), qui est une connexion de données filaire ou une connexion de données sans fil, pour recevoir la distance déterminée du capteur optique (19), et dans lequel le capteur optique (19) est configuré pour déterminer la distance à des intervalles de temps de mesure donnés, et le premier élément de focalisation optique (11) est configuré pour ajuster son point focal à des intervalles de temps d'ajustement donnés sur la base de la distance déterminée reçue du capteur optique (19).

2. Le dispositif de gravure au laser (1) selon la revendication 1, dans lequel l'intervalle de temps de mesure et/ou l'intervalle de temps d'ajustement est d'au plus 20 µs, ou plus spécifiquement d'au plus 10 µs, ou d'au plus 3 µs, et dans lequel le capteur optique (19) est configuré pour fournir les valeurs de distance déterminées au premier élément de focalisation optique (11) via la liaison de données (21).

3. Le dispositif de gravure au laser (1) selon l'une quelconque des revendications précédentes, dans lequel le dispositif de gravure au laser (1) comprend en outre un second élément de focalisation optique (23) placé dans le trajet de la pluralité des faisceaux laser de gravure (27), et configuré pour focaliser la pluralité des faisceaux laser de gravure (27) sur un plan, et/ou dans lequel le capteur optique (19) est un capteur de distance optique ou un capteur de déplacement optique.

4. Le dispositif de gravure au laser (1) selon l'une quelconque des revendications précédentes, dans lequel le dispositif de gravure au laser (1) comprend en outre un premier miroir (5), et dans lequel le premier miroir (5) est un miroir dichroïque (5) configuré pour rediriger le faisceau laser de traitement entrant (25) vers le diviseur de faisceau (7), tout en permettant à une lumière réfléchie par la surface cible (17) de passer à travers le miroir dichroïque (5) sans le rediriger, ou le miroir dichroïque (5) est configuré pour rediriger le faisceau laser réfléchi à partir de la surface cible (17), tout en permettant au faisceau laser de traitement entrant (25) de passer à travers le miroir dichroïque (5) sans le rediriger.

5. Le dispositif de gravure au laser (1) selon l'une quelconque des revendications précédentes, dans lequel le dispositif de gravure au laser (1) comprend en outre un système de vision (9) placé dans le trajet d'un faisceau laser réfléchi par la surface cible (17), et/ou dans lequel le dispositif de gravure au laser (1) est configuré pour être tourné autour d'un ou plusieurs axes de rotation et/ou se déplacer dans une ou plusieurs directions.

6. Le dispositif de gravure au laser (1) selon l'une quelconque des revendications précédentes, dans lequel le premier élément de focalisation optique (11) est configuré pour être tourné autour d'un ou plusieurs axes de rotation.

7. Le dispositif de gravure au laser (1) selon la revendication 6, dans lequel la direction de rotation dépend de la direction de déplacement du dispositif de gravure au laser (1), et/ou dans lequel le premier élément de focalisation optique (11) est configuré pour être tourné de sorte qu'un front d'onde formé par au moins certains des faisceaux laser de gravure (27) est à un angle aigu par rapport à la direction de déplacement du dispositif de gravure au laser (1).

8. Le dispositif de gravure au laser (1) selon l'une quelconque des revendications précédentes, dans lequel le capteur optique (19) est configuré pour déterminer la distance jusqu'à la surface cible (17) à travers une ou plusieurs surfaces intermédiaires placées entre le capteur optique (19) et la surface cible (17) pour permettre à l'élément de focalisation optique (11) de focaliser la pluralité de faisceaux laser de gravure (27) sur la surface cible (17) à travers les une ou plusieurs surfaces intermédiaires.

9. Le dispositif de gravure au laser (1) selon l'une quelconque des revendications précédentes, dans lequel le capteur optique (19) est configuré pour déterminer de manière répétée auxdits intervalles de temps de mesure donnés la distance entre la surface cible (17) et le capteur optique (19), dans lequel le premier élément de focalisation optique (11) est configuré pour recevoir de manière répétée auxdits intervalles de temps de mesure donnés la distance déterminée du capteur optique (19), et dans lequel le premier élément de focalisation optique (11) est configuré pour ajuster de manière répétée auxdits intervalles de temps d'ajustement donnés son point focal sur la base de la distance déterminée reçue du capteur optique (19).

10. Le dispositif de gravure au laser (1) selon l'une quelconque des revendications précédentes, dans lequel le nombre de faisceaux laser de gravure (27) est compris entre 2 et 20, ou plus spécifiquement entre 6 et 10, et dans lequel les faisceaux laser de gravure (27) sont agencés dans un réseau de matrices de faisceaux M × N, où au moins M ou N est supérieur à 1, ou où M et N sont tous deux supérieurs à 1.

11. Le dispositif de gravure au laser (1) selon l'une quelconque des revendications précédentes, dans lequel le capteur optique (19) est configuré pour générer un ou plusieurs faisceaux de mesure (18) ayant une première longueur d'onde, et dans lequel la première longueur d'onde est différente d'une seconde longueur d'onde des faisceaux laser de gravure (27), et/ou dans lequel le dispositif de gravure au laser (1) comprend en outre une source laser (3) configurée pour générer le faisceau laser de traitement (25).

12. Le dispositif de gravure au laser (1) selon l'une quelconque des revendications précédentes, dans lequel le dispositif de gravure au laser (1) est programmé pour se déplacer le long d'une ou plusieurs trajectoires pour permettre à des pièces allongées (29) d'être formées sur la surface cible (17) de sorte que les pièces allongées (29) soient isolées électriquement les unes des autres en conséquence du processus de gravure.

13. Le dispositif de gravure au laser (1) selon l'une quelconque des revendications précédentes, dans lequel la zone de mesure de capteur optique est située dans au plus 20 mm, ou plus spécifiquement dans au plus 10 mm de la surface cible (17).

14. Un système de gravure au laser comprenant le dispositif de gravure au laser (1) selon l'une quelconque des revendications précédentes, et comprenant en outre un système de mouvement configuré pour déplacer le dispositif de gravure au laser (1) le long d'une ou plusieurs trajectoires et/ou pour faire tourner le dispositif de gravure au laser (1) autour d'un ou plusieurs axes de rotation, et dans lequel le système de gravure au laser comprend en outre une unité de vitrage comprenant une ou plusieurs fenêtres transparentes (15₁, 15₂) et la surface cible (17) en tant que partie d'un revêtement électriquement conducteur de l'unité de vitrage.

15. Un procédé de gravure d'une surface cible (17) en utilisant un dispositif de gravure au laser (1), le procédé étant caractérisé ce qui suit :
- un diviseur de faisceau (7) pour diviser un faisceau laser de traitement (25) en une pluralité de faisceaux laser de gravure (27) ;
- un premier élément de focalisation optique (11) avec un point focal ajustable pour focaliser la pluralité de faisceaux laser de gravure (27) sur la surface cible (17) ; et
- un capteur optique (19) configuré pour déterminer à des intervalles de temps de mesure donnés la distance entre la surface cible (17) et le capteur optique (19),
dans lequel le premier élément de focalisation optique (11) est connecté au capteur optique (19) par une liaison de données (21), qui est une connexion de données filaire ou une connexion de données sans fil, pour recevoir la distance déterminée du capteur optique (19), et le premier élément de focalisation optique (11) est configuré pour ajuster son point focal sur la base de la distance déterminée reçue du capteur optique (19), et dans lequel le procédé comprend :
- générer le faisceau laser de traitement (25) ;
- diriger le faisceau laser de traitement généré (25) vers le diviseur de faisceau (7) ; et
- déplacer le dispositif de gravure au laser (1) le long d'une ou plusieurs trajectoires préprogrammées pour permettre à un motif souhaité d'être formé sur la surface cible (17) suite au processus de gravure tout en ajustant le point focal du premier élément de focalisation optique (11) à des intervalles de temps d'ajustement donnés sur la base de la distance déterminée reçue du capteur optique (19).
